Europäisches Patentamt

European Patent Office

Office européen des brevets

(19)

(11) Numéro de publication: **0 138 701**
**B1**

(12) **FASCICULE DE BREVET EUROPEEN**

(45) Date de publication du fascicule du brevet: 04.01.89

(51) Int. Cl.⁴: **G 01 S 5/18**

(21) Numéro de dépôt: 84402016.4

(22) Date de dépôt: 08.10.84

(54) Système de goniotélémétrie.

(30) Priorité: 14.10.83 FR 8316385

(43) Date de publication de la demande:
24.04.85 Bulletin 85/17

(45) Mention de la délivrance du brevet:
04.01.89 Bulletin 89/01

(84) Etats contractants désignés:
BE DE GB IT NL SE

(56) Documents cités:
FR-A-1 012 119
US-A-3 461 421
US-A-3 559 161
US-A-3 789 351

(73) Titulaire: **THOMSON-CSF**
**173, Boulevard Haussmann**
**F-75379 Paris Cédex 08 (FR)**

(72) Inventeur: **Possemé, Gilles**
**THOMSON-CSF SCPI 173, bld Haussmann**
**F-75379 Paris Cedex 08 (FR)**

(74) Mandataire: **Desperrier, Jean-Louis et al**
**THOMSON-CSF SCPI 19, avenue de Messine**
**F-75008 Paris (FR)**

Courier Press, Leamington Spa, England.

## Description

La présente invention se rapporte à un système de goniotélémétrie et notamment à un système comportant des dispositifs de mesures acoustiques et des dispositifs de mesures magnétiques pour localiser des mobiles par leur bruit acoustique rayonné et par le champ magnétique terrestre qu'ils perturbent. Un tel système est particulièrement applicable à la localisation de bateaux. Il convient à la localisation des navires par des mines sous-marines posées ou ancrées sur le fond de la mer.

Il est connu de localiser la position d'un bateau à l'aide de trois goniomètres acoustiques situés en des points différents. Chaque goniomètre détermine, à partir du bruit acoustique rayonné par le bateau, une direction de propagation des ondes émises. L'ensemble des mesures des trois goniomètres permet d'obtenir la position du bateau. Cependant, il s'avère que les résultats sont peu précis en raison des distances à considérer et des difficultés de positionnement précis des goniomètres.

Le brevet US 3,461421 décrit une simplification de ce système dans le cas d'une bouée sonore, où l'on se contente de déterminer seulement la direction d'un bâtiment formant source de bruit, et utilisant 4 hydrophones placés aux sommets d'un carré et dont les signaux sont associés pour former l'équivalent d'un goniomètre acoustique. Comme cette bouée est libre dans l'eau, ce brevet prévoit d'utiliser par exemple un magnétomètre pour déterminer l'orientation relative. Un magnétomètre utilisé pour cet usage est un appareil simple mais dont les indications ne sont pas assez précises pour déterminer les faibles variations du champ magnétique dues par exemple à la présence d'un bâtiment relativement éloigné. Pour éventuellement déterminer la distance entre le bâtiment et la bouée, le brevet propose également d'utiliser un émetteur ultra-sonore dont les signaux réfléchis par le bâtiment sont captés par les hydrophones de la bouée, réalisant ainsi un sonar simplifé. Un tel émetteur utilise une énergie importante et rend la bouée facilement repérable, ce qui est de peu d'importance puisqu'une telle bouée est destinée à servir pendant un temps relativement limité.

Une autre solution consiste à effectuer des mesures magnétiques du champ magnétique perturbé par le bauteau. On peut prévoir dans ce cas un magnétomètre triaxial mesurant les trois composantes du champ magnétique extraites au point de mesure ainsi que plusieurs appareils de mesure de gradient de champ magnétique. Cette solution donne également des résultats peu précis et difficiles à exploiter.

La présente invention fournit un système de mesure fournissant des résultats précis et aisément exploitables. Il présente de plus l'avantage, d'une part, d'être facilement mis en oeuvre et, d'autre part, d'occuper peu de place ce qui lui permet d'être placé dans tout engin, telle qu'une mine, placée au fond de la mer.

L'invention concerne donc un système selon la revendication 1.

L'invention sera mieux comprise et d'autres caractéristiques et avantages apparaîtront à l'aide de la description qui suit en référence aux figures annexées parmi lesquelles:

la figure 1 fournit un schéma explicatif d'un système de localisation,

la figure 2 fournit un schéma explicatif d'un système de localisation acoustique selon l'art antérieur,

la figure 3 fournit un schéma explicatif d'un système selon l'invention,

la figure 4 représente un exemple de réalisation d'un système selon l'invention,

la figure 5 fournit un exemple de réalisation de circuits d'un système selon l'invention,

la figure 6 représente un exemple de réalisation d'un système de mesures magnétiques utilisable dans le cadre d'un système selon l'invention,

la figure 7 représente un exemple d'installation d'un système selon l'invention sur une mine sous-marine.

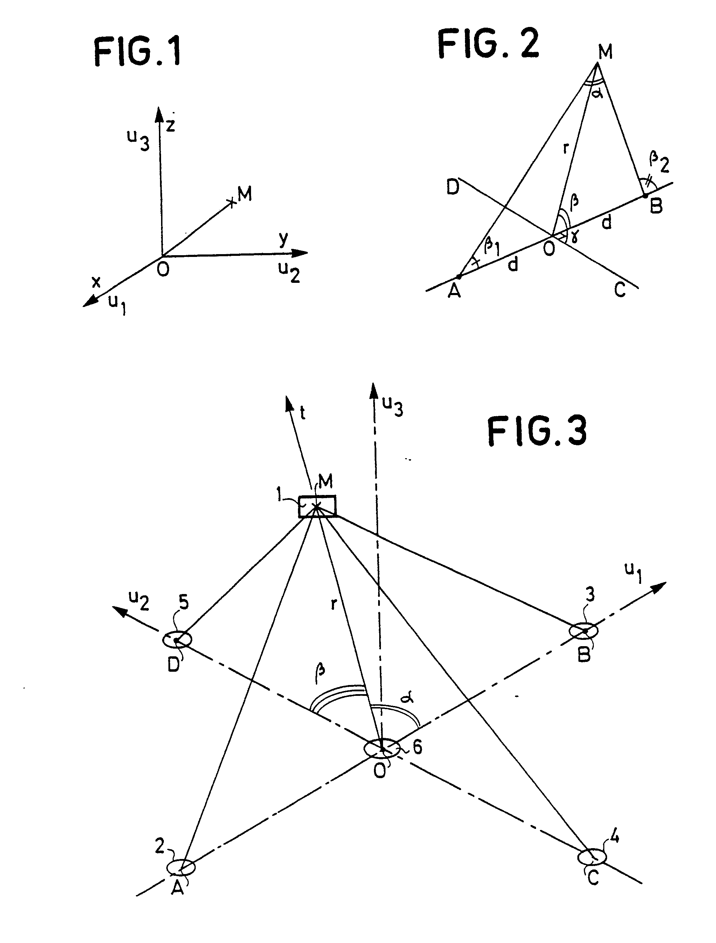

Si on considère un point M situé dans un trièdre Oxyz comme représenté en figure 1, localiser ce point M à partir d'un point de mesure O, c'est obtenir le rayon vecteur $\overrightarrow{OM}$ donc la mesure de $|OM|$ et des trois cosinus directeurs par rapport au trièdre de référence lié à O.

Pour garder une notation indicielle, on adopte les notations suivantes:

$u_1=x$, $u_2=y$ et $u_3=z$, soit $u_i$ avec $i=1$, 2 et 3 se rapportant respectivement aux directions x, y et z.

Dans le cas où le point M ne peut évoluer que dans un demi-espace, par exemple $u_3>0$, la connaissance des deux cosinus directeurs suivant $Ou_1$ et suivant $Ou_2$ est suffisante.

Dans les techniques connues on trouve deux familles de systèmes de localisation: les systèmes de localisation acoustique et les systèmes de localisation magnétique.

Selon les systèmes de localisation acoustique, un point M peut être localisé par rapport à trois points A, B et O comme représenté sur la figure 2. Sir est la distance du point M au point O et si $OA=OB=d$, comme r/d est grand, que l'angle $AMB=\alpha$ est petit, on peut écrire que:

$$\beta=\frac{\beta_1+\beta_2}{2} \quad \text{et} \quad r=\frac{2d \sin \beta}{\sin \alpha}$$

Deux goniomètres en A et B fournissent directement les valeurs de $\cos \beta_1$ et $\cos \beta_2$ et on a $\cos \beta_1-\cos \beta_2=\sin \beta \sin \alpha$ d'où $\sin \alpha$ puis r.

Un troisième goniomètre en O mesure $\gamma$ pour fournir la direction.

L'inconvénient de ce système est que, si l'on suppose une portée de 100 mètres et une précision de deux degrés sur la mesure d'angle, il faut une distance d supérieure à deux mètres. De plus, il faut que les mesures de $\beta_1$ et $\beta_2$ soient réalisées à partir d'une même référence AB ce qui est très difficile compte-tenu des difficultés de mouillage d'un tel système.

Selon les systèmes de localisation magnétique, la masse métallique du mobile à localiser perturbe le champ magnétique ambiant et la mesure de cette perturbation permet théoriquement de localiser le mobile.

Le mobile étant supposé suffisamment éloigné du point de mesure , il est équivalent magnétiquement à un dipôle de moment magnétique $\vec{M}$.

Les valeurs des trois composantes du champ magnétique crée par $\vec{M}$ au point de mesure distant de r sont:

$$H_i = \frac{1}{4\pi} \sum_{j=1}^{3} \frac{M_j}{r^3} (3\ a_i\ a_j - b_{ij}) \tag{1}$$

où $a_i$ sont les cosinus directeurs de $\vec{r}$ dans les trois directions $u_i$ et $b_{ij}=1$ pour $i=j$ et $b_{ij}=0$ pour $i \neq j$. Pour des raisons de simplicité on identifie $H_i$ avec $H_{ui}$.

On sait également mesurer les gradients de ces composantes magnétiques.

Dans ces conditions, la mesure des composantes du champ magnétique et des gradients de champ magnétique perturbés permettent de localiser un point M. Cependant, par cette méthode, on obtient au prix de calculs difficiles, une approximation très grossière à cause des erreurs dues au modèle simplifié, des cosinus directeurs et donc de r.

L'invention fournit donc un système de localisation précis, facilement exploitable et dont la mise en oeuvre est aisée.

La figure 3 représente un schéma explicatif d'un système selon l'invention. Dans un trièdre trirectangle $Ou_1\ u_2\ u_3$ se trouve un objet 1, un bateau par exemple à localiser. Sur l'axe $Ou_1$ sont placés, en deux points A et B symétriques par rapport au point O, deux hydrophones 2 et 3. Sur l'axe $Ou_2$ sont placés en deux points C et D symétriques par rapport au point O, deux hydrophones 4 et 5 au point O est placé un magnétomètre triaxial et un gradientmètre de champ magnétique 6. Ce gradientmètre mesure la variation d'une composante $H_i$ du champ suivant l'axe $O_{ui}$ de cette composante soit $\partial H_i / \partial u_i$.

Les deux hydrophones 2 et 3 constituent un premier goniomètre et permettent de mesurer, dans le plan formé par l'axe $Ou_1$ et le point M, l'angle $\alpha = \widehat{MOB}$.

De même, les deux hydrophones 4 et 5 constituent un deuxième goniomètre et permettent de mesurer, dans le plan formé par l'axe $Ou_2$ et le point M, l'angle $\beta = \widehat{MOD}$.

Si l'on appelle Ot la droite passant par les points O et M, les deux goniomètres permettent de déterminer la droite Ot par rapport au plan formé par les deux axes $Ou_1$ et $Ou_2$. Notons que trois capteurs pourraient suffire pour effectuer une telle mesure. L'intersection O constitue le point de mesure où sont déterminés les angles $\alpha$ et $\beta$.

Au point O, le magnétomètre triaxial et le gradientmètre de champ magnétique 6 permettent de mesurer les composantes du champ magnétique et les composantes du gradient de champ magnétique. On démontre que la distance r séparant le point M du point O est proportionnelle aux trois composantes du champ magnétique et inversement proportionnelle au graidient de champ magnétique tel que défin précédemment. La formule donnant r est de la forme:

$$r = \frac{3}{\dfrac{\partial Hi}{\partial u_i}} \sum_{j=1}^{3} \sum_{k=1}^{3} B_j^k\ C_i^j\ H_k \tag{2}$$

où i peut prendre indifféremment les valeurs 1, 2, 3

avec

$$B_j^k = \frac{3}{2} a_j\ a_k - b_{jk}$$

avec

$$(b_{jk} = b_{ij} = 1 \text{ pour } j=k \text{ ou } i=j)$$

$$(b_{jk} = b_{ij} = 0 \text{ pour } j \neq k \text{ ou } i \neq j)$$

et

$$C_i^j = -5a_i^2\ a_j + 2a_i\ b_{ij} + a_j$$

Dans ces formules a sont les cosinus directeurs tels que:

$$a_1 = \cos \alpha \qquad a_2 = \cos \beta \qquad a_3^2 = 1 - (a_1^2 + a_2^2)$$

De plus de connaissance de r permet de déterminer les composantes du moment dipolaire $M_1$, $M_2$, $M_3$ suivant:

$$M_j = 4\pi r^3 \sum_{k-1}^{3} B_j^k H_k \qquad (3)$$

obtenue en inversant la relation (1).

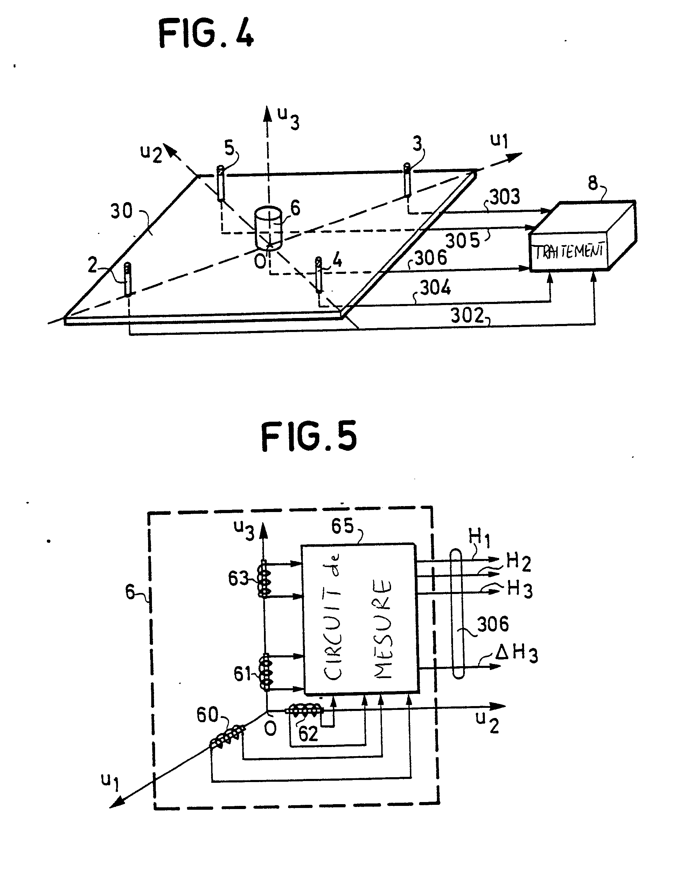

La figure 4 représente un exemple de réalisation du système de la figure 3.

Dans cet exemple de réalisation, les capteurs sont de type omnidirectionnel à faible bruit électrique. Chaque hydrophone 2 à 5, le magnétomètre et le gradientmètre de champ magnétique 6 sont connectés à un dispositif de traitement 8 par des liaisons 302 à 306. Ce dispositif 8 comporte des moyens de calculer d'une part les cosinus des angles et à partir des données fournies par les goniomètres, et d'autre part, la distance r, en utilisant les formules précédentes, à partir de données fournies par le magnétomètre et le gradientmètre de champ magnétique, et des cosinus directeurs.

Pour obtenir une mesure correct de r, il faut que le support plan (30) soit parallèle à la surface de la mer c'est-à-dire horizontal. Si le support bouge, ce qui est le cas lorsqu'il n'est pas posé sur le fond de la mer, le support (30) et les hydrophones peuvent être montés de manière à obtenir un pendulage ou bien sa position dans l'espace peut être déterminée au moyen de deux capteurs de position, par exemple, des accéléromètres, l'un selon $u_1$, l'autre selon $u_2$, le calcul de r étant corrigé par un simple changement d'axes.

Il est à noter que le support 30 pourra être en matériau absorbant les ondes acoustiques de façon à éviter les phénomènes de réflexions parasites préjudiciables à la mesure.

Le gradientmètre de champ magnétique peut être constitué de deux appareils distincts. Selon l'exemple de réalisation de la figure 5, il est réalisé en un seul appareil selon un type appelé fluxgate.

Comme représenté schématiquement sur la figure 5, la partie sensible du magnétomètre est composée de trois sondes (60), (61) et (62) suivant les trois axes ($Ou_1$, $Ou_2$, $Ou_3$), chaque sonde étant formée d'un noyau magnétique saturable et d'un enroulement d'excitation parcouru par un courant alternatif.

Un circuit de mesure (65) détecte la présence d'un champ magnétique suivant l'axe de la sonde. Une sonde (63) placée suivant le même axe $Ou_3$ que la sonde (61) permet d'obtenir en coopération avec celle-ci la mesure du gradient de champ suivant l'axe $Ou_3$ ($\Delta H_3$). Les valeurs $H_1$, $H_2$, $H_3$ et $\Delta H_3$ sont fournies sur la connexion de sortie 306.

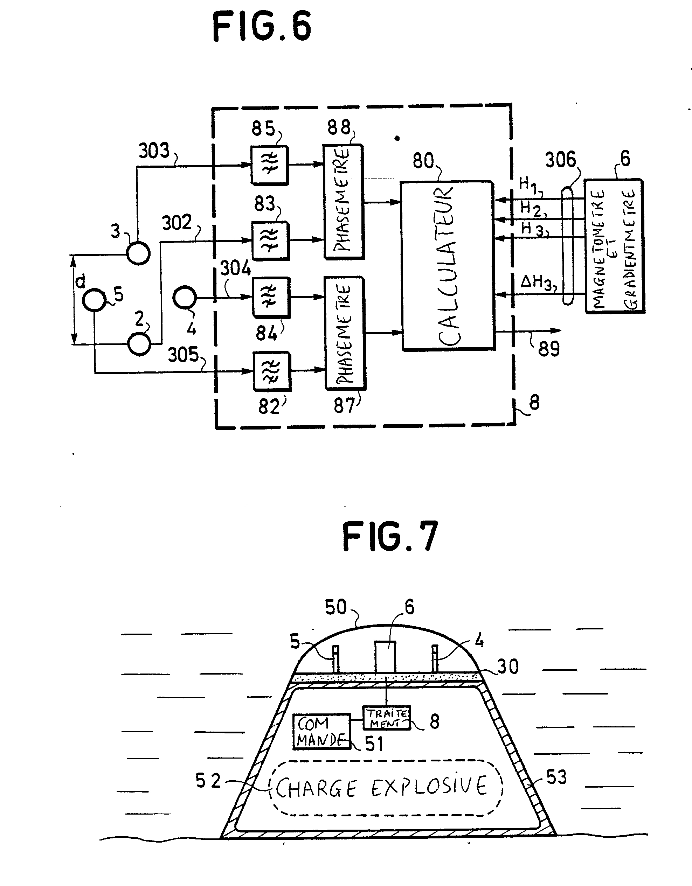

En se reportant à la figure 6, on va maintenant décrire un exemple de réalisation du dispositif de traitement 8 de la figure 4.

On retrouve sur cette figure les hydrophones 2 à 5 disposés de façon analogue aux dispositions précédentes, le magnétomètre et le gradienttre 6, situés à droite de la figure pour des facilités de représentation, et le dispositif de traitement 8. Le dispositif de traitement 8 comporte des filtres 82, 83, 84, 85 connectés respectivement aux liaisons 302, 303, 304, 305, un premier phasemètre 87 connecté aux filtres 82 et 84 correspondant à deux hydrophones 4 et 5 d'un même goniomètre, un deuxième phasemètre 88 connecté aux filtres 82 et 83 correspondant aux deux autres hydrophones 2 et 3 de l'autre goniomètre. Le dispositif 8 comporte également un calculateur 80 recevant des données numériques des phasemètres, du magnétomètre et du gradientmètre, les traitant et fournissant sur une sortie 89 une information de position du bateau M suivant (2) et les composantes du moment dipolaire suivant (3).

Les capteurs 2 à 5 reçoivent les ondes acoustiques issues du bateau 1 (de la figure 3). La bande de bruit acoustique s'étend dans une gamme relativement large, de quelques Hertz à quelques milliers de Hertz. Les signaux fournis par les capteurs 2 à 5 sur leur liaison 302 à 305 sont donc filtrés dans une bande étroite autour d'une fréquence de travail choisie pour le système. A titre d'exemple, on pourra travailler à une fréquence de 2500 Hertz. Les signaux résultant sont transmis sur les deux entrées de deux phasemètres 87 et 88. Cet phasemètres, avantageusement numériques, fournissent les valeurs des deux cosinus directeurs $a_1$ et $a_2$ suivant $Ou_1$ et $Ou_2$. Si d est la distance séparant les deux capteurs 2 et 3 ainsi que 4 et 5, le cosinus directeur est obtenu directement par la mesure de la différence de phase $\Delta\varphi$ suivant

$$a = \frac{\lambda\Delta\varphi}{2\pi d}$$

où $\lambda$ est la longueur d'onde correspondante à la fréquence de travail. Pour que $\Delta$ soit toujours inférieur à 180°, la distance d est choisie telle que $d < \lambda/2$. A une fréquence de travail de 2500 Hz on prendra par exemple $d = 30$ cm. Les valeurs des cosinus directeurs sont transmises au calculateur 80. Celui-ci reçoit par ailleurs, par la liaison 306, les valeurs des composantes de champ magnétique et de gradient de champ magnétique. L'application des formules citées précédemment permet donc au calculateur 80 de fournir sur la sortie 89 la direction, la distance et les composantes du moment dipolaire.

Le système peut comporter trois gradientmètres mesurant les variations $\partial H_1/\partial u_1$, $\partial H_2/\partial u_2$, $\partial H_3/\partial u_3$ et on choisit celui qui fournit le signal d'amplitude la plus forte. En effet l'un quelconque de ces trois gradients peut être utilisé.

La figure 7 représente un exemple de mise en oeuvre du système de l'invention dans une mine sous-marine.

Une mine sous-marine performante doit pouvoir localiser le plus précisément possible les bateaux qui s'en approchent pour effectuer une éventuelle classification opérationnelle et pour décider de l'instant du feu. Par exemple s'il s'agit d'une mine profonde, le calcul des distances projetées sur l'axe vertical permet de faire la différence entre bateau de surface et sous-marin.

La figure 7 représente schématiquement une mine posée sur le fond et munie du système de goniotélémétrie décrit précédemment.

Le systéme est monté à la partie supériure de la mine. La coque est tronquée et avantageusement un surmoulage en matériau plastique transparent acoustiquement (50) vient protéger les hydrophones tels que 4 et 5, ainsi que le magnétomètre et le gradientmètre de champ magnétique 6 fixés sur le support 30, on distingue la charge explosive (52) et l'électronique associée (51) qui commande en particulier la mise à feu à partir des indications fournies par le dispositif de traitement 8 du système de l'invention.

## Revendications

1. Système de goniotélémétrie destiné à localiser un mobile (M) émetteur d'un rayonnement acoustique, du type comprenant un ensemble d'hydrophones (2—5) situés dans un même plan pour recevoir ce rayonnement acoustique, et des moyens de traitement (8) reliés à ces hydrophones pour former avec ceux-ci un premier et un deuxième goniomètres acoustiques et pour déterminer les cosinus directeurs de la direction dudit mobile, caractérisé en ce qu'il comprend en outre un magnétomètre triaxial (60, 61, 62) et un gradientmètre (61, 63) pour déterminer au niveau du système les composantes du champ magnétique terrestre selon trois axes distincts ($Ou_1$, $Ou_2$, $Ou_3$) et le gradient de ce champ selon l'un de ces axes, et que lesdits moyens de traitement (8) permettent de déterminer à partir desdits cosinus directeurs, desdits composantes et dudit gradient du champ, la distance dudit mobile au système.

2. Système selon la revendication 1, caractérisé en ce que lesdits moyens de traitement (8) permettent en outre de déterminer le moment dipolaire du mobile.

3. Système de goniotélémétrie selon les revendications 1 ou 2, caractérisé en ce que ledit premier goniomètre acoustique comporte deux hydrophones (2, 3) situés selon l'un desdits axes dit li premier axe ($Ou_1$) et ledit deuxième goniomètre acoustique comporte deux hydrophones (4, 5) situés selon un autre desdits axes dit le deuxième axe ($Ou_2$) coupant ledit premier axe ($Ou_1$) en un point d'intersection (O) de telle façon que chaque goniomètre fasse une mesure d'angle à partir de ce point d'intersection (0).

4. Système de goniotélémétrie selon la revendication 3, caractérisé en ce que ledit magnétomètre triaxial ainsi que ledit gradient-mètre de champ magnétique sont situés au point d'intersection (O).

5. Système de goniotélémétrie selon les revendications 3 ou 4, caractérisé en ce que le magnétomètre triaxial est orienté de façon à effectuer des mesures de composantes de champ magnétique selon le premier axe ($Ou_1$), le deuxième axe ($Ou_2$) et selon un troisième axe ($Ou_3$) perpendiculaire aux deux premiers.

6. Système de goniotélémétrie selon l'une des revendications 3 à 5, caractérisé en ce que le gradientmètre de champ magnétique est orienté de façon à mesurer le gradient de champ magnétique selon une direction ($Ou_3$) perpendiculaire au premier axe ($Ou_1$) et au deuxième axe ($Ou_2$).

7. Système de goniotélémétrie selon l'une des revendications 2 à 4, caractérisé en ce que le premier axe ($Ou_1$) et le deuxième axe ($Ou_2$) sont perpendiculaires.

8. Système de goniotélémétrie selon l'une des revendications 1 à 7, caractérisé en ce que les goniomètres (2—3, 4—5), le magnétomètre triaxial et le gradientmètre sont fixés sur un embase 30 en matériau absorbant les ondes acoustiques.

## Patentansprüche

1. Goniotelemetriesystem zur Lokalisierung eines Fahrzeugs (M), das eine Schallstrahlung assuendet, mit einer in einer gemeinsamen Ebene angeordneten Gruppe von Hydrophonen (2—5) zum Auffangen dieser Schallstrahlung, und mit an die Hydrophone angeschlossenen Verarbeitungsmitteln (8), die zusammen mit den Hydrophonen ein erstes und zweits Schallgoniometer bilden und der Bestimmung der Richtungskosinuswerte der Richtung des Fahrzeugs dienen, dadurch gekennzeichnet, daß das System weiter ein dreiachsiges Magnetometer (60, 61, 62) und einen Gradientenmesser (61, 63) aufweist, um in Höhe des Systems die Komponenten des magnetischen Erdfeldes nach drei verschiedenen Achsen ($Ou_1$, $Ou_2$, $Ou_3$) wowie den Gradienten dieses Feldes bezüglich einer dieser Achsen zu bestimmen, und daß die Verarbeitungsmittel (8) gestatten, anhand der Richtungskosinuswerte, der genannten Komponenten und des Feldgradienten die Entfernung des Fahrzeugs vom System zu bestimmen.

2. System nach Anspruch 1, dadurch gekennzeichnet, daß die Verarbeitungsmittel (8) weiter gestatten, das Dipolmoment des Fahrzeugs zu bestimmen.

3. Goniotelemetriesystem nach den Ansprüchen 1 oder 2, dadurch gekennzeichnet, daß das erste Schallgoniometer zwei Hydrophone (2, 3) umfaßt, welche in Richtung einer der genannten Achsen, erste Achse ($Ou_1$) genannt, angeordnet sind, und daß das zweite Schallgoniometer zwei Hydrophone (4, 5) umfaßt, welche in Richtung einer anderen der genannten Achsen, zweite Achse ($Ou_2$) genannt, angeordnet

sind, wobei diese Achse (Ou$_2$) die erste Achse (Ou$_1$) in einem Punkt (O) derart schneidet, daß jedes Goniometer eine Winkelmessung von diesem Schnittpunkt (O) aus durchführt.

4. Goniotelemetriesystem nach Anspruch 3, dadurch gekennzeichnet, daß das dreiachsige Magnetometer sowie der Gradientenmesser des Magnetfeldes im Schnittpunkt (O) angeordnet sind.

5. Goniotelemetriesystem nach den Ansprüchen 3 oder 4, dadurch gekennzeichnet, daß das dreiachsige Magnetometer derart ausgerichtet ist, daß es Messungen der Magnetfeldkomponenten in Richtung der ersten Achse (Ou$_1$), der zweiten Achse (Ou$_2$) und einer dritten Achse (Ou$_3$) durchführt, welche senkrecht zu den beiden erstgenannten steht.

6. Goniotelemetriesystem nach einem der Ansprüche 3 bis 5, dadurch gekennzeichnet, daß der Gradientenmesser des Magnetfeldes derart ausgerichtet ist, daß er den Magnetfeldgradienten in einer Richtung (Ou$_3$) mißt, die senkrecht zur ersten Achse (Ou$_1$) und zur zweiten Achse (Ou$_1$) steht.

7. Goniotelemetriesystem nach einem der Ansprüche 2 bis 4, dadurch gekennzeichnet, daß die erste Achse (Ou$_1$) und die zweite Achse (Ou$_2$) senkrecht aufeinanderstehen.

8. Goniotelemetriesystem nach einem der Ansprüche 1 bis 7, dadurch gekennzeichnet, daß die Goniometer (2—3, 4—5), das dreiachsige Magnetometer und der Gradientenmesser auf einer Grundplatte (30) aus einem die Schallwellen absorbierenden Material befestigt sind.

**Claims**

1. A goniotelemeter system for localizing a vehicle (M) which transmits an acoustic radiation, comprising a set of hydrophones (2—5) located in a common plane for receiving this acoustic radiation, and processing means (8) connected to the hydrophones for constituting with the latter a first and a second acoustic goniometer and for determining the cosine values of the direction of the vehicle, characterized in that the system further comprises a triaxial magnetometer (60, 61, 62) and a gradient meter (61, 63) for determining, at the level of the system, the components of the magnetic earth field according to three distinct axes (Ou$_1$, Ou$_2$, Ou$_3$) and the gradient of this field according to one of these axes, and that said processing means (8) permit to determine the distance between the vehicle and the system by means of said cosine values, said components and said field gradient.

2. A system according to claim 1, characterized in that the processing means (8) further permit to determine the dipole moment of the vehicle.

3. A goniotelemeter system according to claims 1 or 2, characterized in that the first acoustic goniometer comprises two hydrophones (2, 3) located along one of said axes, referred to as first axis (Ou$_1$), and that the second acoustic goniometer comprises two hydrophones (4, 5) located along another of said axes, referred to as second axis (Ou$_2$), which intersects the first axis (Ou$_1$) at an intersection point (O), in such a way, that each of the goniometers measures the angles with reference to this intersection point (O).

4. A goniotelemeter system according to claim 3, characterized in that the triaxial magnetometer as well as the magnetic field gradient meter are located in the intersection point (O).

5. A goniotelemeter system according to claim 3 or 4, characterized in that the triaxial magnetometer is adjusted to perform the measurements of the components of the magnetic field in the directions of the first axis (Ou$_1$), the second axis (Ou$_2$) and a third axis (Ou$_3$), which is perpendicular to the two first ones.

6. A goniotelemeter system according to claims 3 to 5, characterized in that the magnetic field gradient meter is adjusted to measure the magnetic field gradient along a direction (Ou$_3$), which is perpendicular to the first axis (Ou$_1$) and to the second axis (Ou$_3$).

7. A goniotelemeter system according to any one of the claims 2 through 4, characterized in that the first axis (Ou$_1$) and the second axis (Ou$_2$) are perpendicular to one another.

8. A goniotelemeter system according to any one of claims 1 to 7, characterized in that the goniometers (2—3, 4—5), the triaxial magnetometer and the gradient meter are fixed to a base plate (30) consisting of a material capable of absorbing the acoustic waves.

# FIG.1

# FIG. 2

# FIG.3

# FIG. 4

# FIG. 5

2

EP 0 138 701 B1

# FIG.6

# FIG.7